**Europäisches Patentamt**

**European Patent Office**

**Office européen des brevets**

(19)

(11) Veröffentlichungsnummer : **0 164 436**
**B1**

# (12) EUROPÄISCHE PATENTSCHRIFT

(45) Veröffentlichungstag der Patentschrift :
02.03.88

(21) Anmeldenummer : 84106822.4

(22) Anmeldetag : 14.06.84

(51) Int. Cl.⁴ : **C 21 B   5/00**, B 65 G  53/14,
**F 23 K   3/02**

(54) Vorrichtung für eine dosierte Förderung von staubförmigen Gütern.

(43) Veröffentlichungstag der Anmeldung :
**18.12.85 Patentblatt 85/51**

(45) Bekanntmachung des Hinweises auf die Patenterteilung : **02.03.88 Patentblatt 88/09**

(84) Benannte Vertragsstaaten :
**AT BE CH DE FR GB IT LI LU NL SE**

(56) Entgegenhaltungen :
**DE-A- 2 248 859**
**DE-A- 2 628 236**
**DE-A- 2 853 106**
**FR-A-   648 588**
**FR-A- 2 357 452**
**US-A- 1 882 056**

(73) Patentinhaber : **Stein, Wilfried**
**Frankstrasse 13a**
**D-5800 Hagen 7 (DE)**

(72) Erfinder : **Stein, Wilfried**
**Frankstrasse 13a**
**D-5800 Hagen 7 (DE)**

(74) Vertreter : **Missling, Arne, Dipl.-Ing. et al**
**Patentanwälte Dipl.-Ing. R. Schlee Dipl.-Ing. A. Mis-**
**sling Bismarckstrasse 43**
**D-6300 Giessen (DE)**

## Beschreibung

Die Erfindung betrifft eine Vorrichtung für eine dosierte Förderung von staubförmigen Gütern, insbesondere von Kohlenstaub, z. B. in Öfen, insbesondere für kleine und kleinste Mengen, mit einer Einfüllöffnung für das zu fördernde Gut, mit einem die Fördereinrichtung an der Ausgangsseite verschließenden Diffusionskonus, mit mindestens einer Austrittsöffnung für das zu fördernde Gut, mit die Fördereinrichtung durchsetzenden Injektorrohren, die der Druckgaszufuhr dienen und den Austrittsöffnungen gegenüberliegend angeordnet sind.

Ein Anwendungsgebiet für den Einsatz einer vorstehend genannten Einrichtung sind Verbrennungsöfen. In Verbrennungsöfen wie auch in Öfen für die Stahlherstellung, z. B. in Kupolöfen, wird in der Regel Öl oder Koks eingesetzt. Dieser Koks- oder Öleinsatz könnte durch Zugabe von Kohlenstaub in beachtlichem Umfange vermindert werden. Dieser Kohlenstaub ist in reichlicher Menge als Abfallprodukt vorhanden und hat auf die Gewichtseinheit bezogen einen höheren Heizwert als Koks, er ist billiger und hat in der Regel einen geringeren Schwefelgehalt als Koks. Bei Zusatz von Kohlenstaub bei der Verbrennung von Koks können verringerte Schmelzzeiten erreicht werden, des weiteren sind die Lagerung und der Transport des Kohlenstaubes unproblematischer als derjenige von Koks.

Ersetzt man z. B. die Kokszugabe zu 30 % bei Kupolöfen durch Kohlenstaub, so ist hierdurch eine große Kostenersparnis zu erreichen. Das Problem der Kohlenstaubzugabe liegt dabei nicht in der Zugabe großer Mengen, sondern in der dosierten Zugabe kleiner Mengen, die zudem noch an den momentanen Bedarf anpaßbar sein müssen.

Aus der FR-A-23 57 452 ist eine Vorrichtung für die Pulverisierung von Beton bekannt, bestehend aus einer rohrförmigen Fördereinrichtung sowie einer Transporteinrichtung mit einer Zerstäuberdüse. Das zu zerstäubende Material wird über einen Schacht eingegeben und mittels einer Schnecke zu dem Zerstäubungsbereich zugeführt, wobei hier die Besonderheit besteht, daß dieser Zerstäuberbereich sich zunächst erweitert, um dann sich zu verengen, so daß hier ein sogenannter Blockierbereich entsteht, in dem das zu zerstäubende Material durch die Schnecke gepreßt und von der Zerstäuberdüse zerstäubt und weitertransportiert wird. Die Zerstäuberdüse besteht aus einem Rohr, das innerhalb der Förderschnecke angeordnet ist und das mit Preßluft versorgt wird.

Aus der FR-A-648 588 ist eine Vorrichtung bekannt für die gleichzeitige Speisung mehrerer Brenner mit regelbaren Mengen eines pulverisierten brennbaren Stoffes. Der brennbare pulverisierte Stoff wird in einen Sammler gefüllt, wonach dieser nach Zugabe einer gewissen Menge Luft oder Gas den Brennern in regelbaren Mengen zugeführt wird. Für diesen Zweck sind an ein Sammelrohr, in das das brennbare Gut eingeblasen wird, ebenso viele Rohre angeschlossen wie es Brenner zu versorgen gilt. In jede der zu dem Brenner führenden Leitungen reicht ein Gebläserohr, in dem ein höherer Luftdruck herrscht als in dem Luftstrom im pulverisierten Brennstoff. Die Düsen sind mit Regelvorrichtungen versehen, mit denen die zusätzlich eingeblasene Luft regelbar ist. Durch die eingeblasene Luft, die Injektorwirkung hat, wird der pulverisierte Brennstoff in die einzelnen Leitungen mitgerissen und zu dem Brenner geführt. Bei dieser Vorrichtung wird bei einer Erhöhung des Luftausstoßes automatisch eine erhöhte Menge an pulverisiertem Brennstoff dem Brenner zugeführt, so daß hierdurch gleichzeitig eine Einregulierung des Brennstoff-Luftgemisches erhalten wird.

Der Erfindung liegt die Aufgabe zugrunde, eine Vorrichtung der eingangs ganannten Art für ein dosiertes Zuführen von Kohlenstaub in Öfen vorzuschlagen, mit der dem Ofen auch kleinste Mengen dosiert zugeführt werden können.

Diese Aufgabe wird erfindungsgemäß durch eine Druckaufgabe des zu fördernden Gutes in die Fördereinrichtung, durch eine oder mehrere Austrittsöffnungen, die sich in Richtung auf die Aufgabe des Kohlenstaubes hin stetig vergrößern und durch der Anzahl der Austrittsöffnungen entsprechende Injektorrohre, die relativ zu den jeweiligen Austrittsöffnungen verstellbar sind, gelöst.

Der Kohlenstaub wird der Fördereinrichtung kontinuierlich zugeführt, wobei die Zufuröffnungen vorteilhaft mit einem Vorratsbehälter verbunden sind, der unter Druck steht, so daß die kontinuierliche Zuführung gewährleistet ist. Vorteilhaft hat sich weiterhin herausgestellt, den Kohlenstaub in der Auslauföffnung des Vorratsbehälters zu fluidisieren, wodurch Störungen in der kontinuierlichen Zufuhr des Kohlenstaubes zur Fördereinrichtung vermieden sind. In der Fördereinrichtung wird der Kohlenstaub zur Ausgangsöffnung hin bewegt, die durch einen Diffusionskonus verschlossen ist. Dieser Diffusionskonus weist eine oder mehrere Öffnungen auf, an denen die Förderleitungen angeschlossen sind, die den Kohlenstaub zu dem Ofen führen. Diese Öffnungen sind konisch entgegen der Förderöffnung erweitert, so daß ein einwandfreies Strömungsverhalten des Kohlenstaubes in der Fördereinrichtung und in die Förderleitungen erhalten wird. Zum Transport des Kohlenstaubes dienen in den Diffusionskonus mündende Injektorrohre, wobei jeder Austrittsöffnung ein Injektorrohr zugeordnet ist. Der Abstand des vorderen Endes des Injektorrohres relativ zur Austrittsöffnung ist einstellbar, wobei sämtliche Injektorrohre zu den Austrittsöffnungen den gleichen Abstand haben sollten, damit die Fördermenge in den Förderleitungen stets die gleiche ist.

Was die Fördermenge betrifft, so ist diese zum einen abhängig von dem lichten Durchmesser der Förderleitungen sowie dem Durchmesser und dem Druck des Fördergases in den Injektorleitungen. Die Wahl dieser Parameter bestimmt die maximale Fördermenge je Austrittsöffnung, d. h. je Förderleistung. Die Einstellung der jeweils geförderten Menge Kohlenstaub in einer erfindungsgemäßen Fördereinrichtung erfolgt in zweierlei Weise. Zum einen kann die Menge durch die Größe des Druckes in den Injektorrohren reguliert werden, wobei die Förderung desto kleiner wird je größer der Injektorrohrdruck gewählt wird. Eine weitere Möglichkeit der Verstellung der Fördermenge besteht darin, daß der Abstand der Enden der Injektorrohre von den Austrittsöffnungen verändert wird. Wird der Abstand vergrößert, so wird mehr Kohlenstaub gefördert. Bei einer entsprechenden Verkleinerung wird die Menge reduziert. Mit dieser mechanischen Feineinstellung läßt sich die geförderte Kohlenstaubmenge sehr genau einregulieren.

Die geförderte Menge ist weiterhin davon abhängig, wie der Aufgabedruck des Kohlenstaubes in die Fördereinrichtung gewählt wird. Für eine konstante Steuerung sollte dieser Aufgabedruck immer gleichmäßig beibehalten werden. Dies wird gemäß der Erfindung z. B. dadurch erreicht, daß die Aufgabe des Kohlenstaubes über einen Druckbehälter erfolgt, wobei in diesem Behälter ein vorbestimmter Druck ständig aufrechterhalten wird.

Gemäß einem weiteren Vorschlag der Erfindung sind die Förderleitungen über eine Bypass-Leitung an eine Druckluftleitung angeschlossen. Diese Bypass-Leitungen dienen dazu, die Förderleitungen dann freizublasen, falls es infolge der Konsistenz des Kohlenstaubes eventuell zu Verstopfungen in der Förderleitung kommen sollte.

Weitere vorteilhafte Ausgestaltungen der Erfindung gehen aus den Ansprüchen in Verbindung mit Zeichnung und Beschreibung hervor.

Ein Ausführungsbeispiel der Erfindung ist im folgenden anhand der Zeichnung näher beschrieben, in dieser zeigen :

Fig. 1 eine erfindungsgemäße Vorrichtung für eine dosierte Förderung von Kohlenstaub im Einsatz bei einem Kupolofen,

Fig. 2 einen Schnitt nach Linie A-B in Fig. 1,

Fig. 3 einen Längsschnitt durch eine Fördereinrichtung gemäß der Erfindung und

Fig. 4 eine Draufsicht auf die Fördereinrichtung gemäß Fig. 3, teilweise im Schnitt.

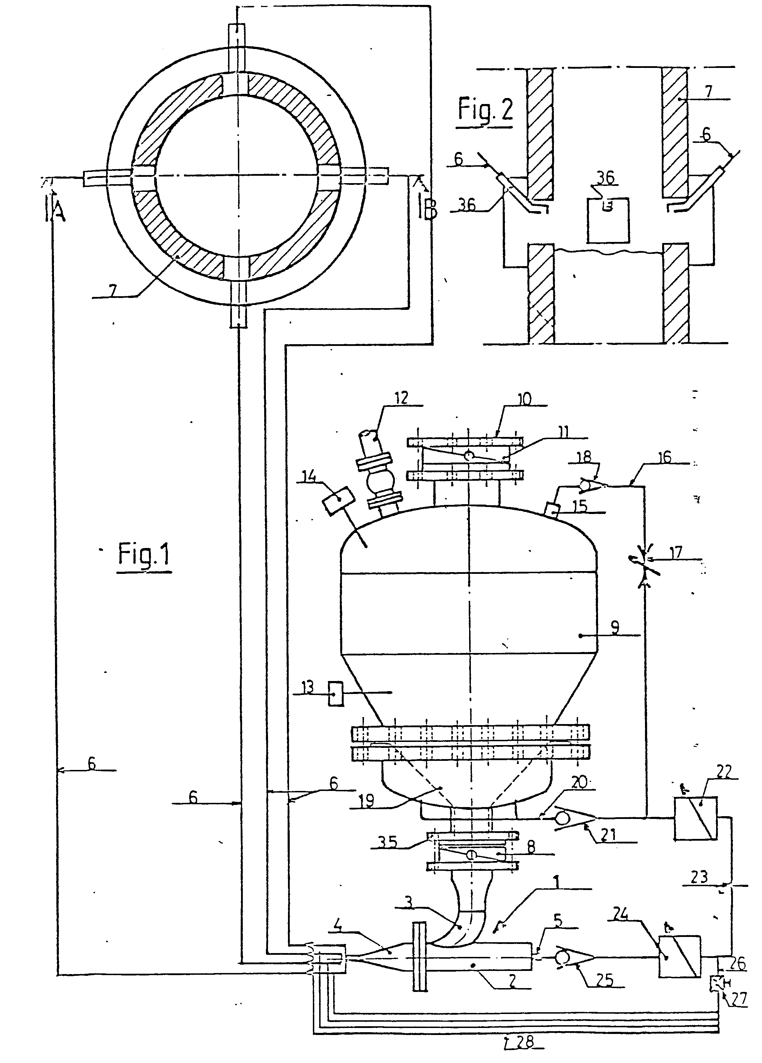

In Fig. 1 ist die Vorrichtung zur Förderung von Kohlenstaub mit 1 bezeichnet. Diese Vorrichtung besteht aus einem Förderrohr 2, das mit einer seitlich liegenden Einfüllöffnung 3 versehen ist und an seiner Auslaufseite mit einem Diffusionskonus 4 verschlossen ist. Über eine Versorgungsleitung 5 wird der Vorrichtung 1 Druckluft für den Transport des Kohlenstaubes zugeführt.

Vom Diffusionskonus 4 gehen im Ausführungsbeispiel vier Förderleitungen 6 ab, die hier z. B. zu einem Kupolofen 7 führen und diesen mit dem Kohlenstaub versorgen.

An der Einfüllöffnung 3 der Vorrichtung 1 ist ein Ventil 8 angeflanscht, auf dessen anderer Seite ein Vorratsbehälter 9 befestigt ist. Dieser Vorratsbehälter 9 nimmt den Kohlenstaub auf, der über eine Einfüllöffnung 10 beschickt wird, die gleichfalls über ein Ventil 11 verschließbar ist. Der Vorratsbehälter 9 ist des weiteren mit einem Entlüftungsventil 12 sowie mit zwei Meßsonden 13 und 14 versehen, über die der Füllstand des Vorratsbehälters 9 mit Kohlenstaub feststellbar ist. Der Vorratsbehälter 9 weist des weiteren einen Anschluß 15 für eine Druckluftleitung 16 auf, in die ein Regelventil 17 zur Steuerung des Druckes eingeschaltet ist. Des weiteren ist in die Druckluftleitung 16 ein Rückschlagventil 18 eingebaut. Über die Druckluftleitung 16 wird der Vorratsbehälter 9 mit Druckluft beaufschlagt, so daß der Kohlenstaub nicht nur aufgrund seines Eigengewichtes, sondern zusätzlich durch den herrschenden Luftdruck nach unten aus dem Behälter 9 herausgedrückt wird.

In die Ausflußöffnung 19 des Vorratsbehälters 9 ist des weiteren eine Druckluftzuleitung 20 eingesetzt, über die Druckluft zur Fluidisierung des Kohlenstaubes eingeführt wird, die das Fließvermögen des Kohlenstaubes verbessert. In die Druckluftleitung 20 ist des weiteren ein Rückschlagventil 21 eingebaut. Die Druckluftleitungen 16 und 20 sind über ein Druckregelventil 22 an eine Druckversorgungsleitung 23 angeschlossen.

An die gleiche Druckversorgungsleitung 23 ist über ein weiteres Druckregelventil 24 die Versorgungsleitung 5 für die Vorrichtung 1 angeschlossen. Zwischen Druckregelventil 24 und der Vorrichtung 1 ist ein Rückschlagventil 25 eingebaut.

Des weiteren ist an die Versorgungsleitung 23 eine weitere Druckluftleitung 26 angeschlossen, die mit einem Absperrventil 27 versehen ist. Die Druckluftleitung 26 verzweigt sich in vier Bypass-Leitungen 28, die in den Förderleitungen 6 münden. Die Aufgabe dieser Bypass-Leitungen besteht darin, eventuelle Verstopfungen in den Förderleitungen 6 durch kurzzeitige Aufgabe eines ausreichend hohen Druckes zu beseitigen.

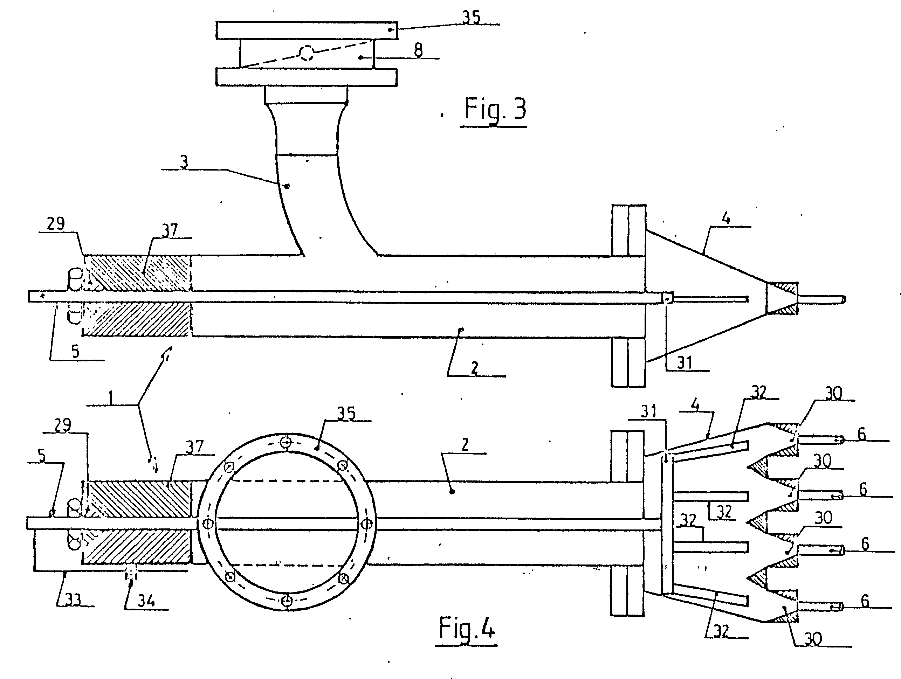

Die erfindungsgemäße Vorrichtung zur Dosierung der Fördermenge für den Kohlenstaub ist in den Fig. 3 und 4 in vergrößertem Maßstab dargestellt. Gleiche Teile sind mit gleichen Bezugszeichen versehen. Die Fördervorrichtung 1 besteht aus einem Förderrohr 2, das an seiner Hinterseite bis auf eine Bohrung für die Aufnahme der Versorgungsleitung 5 verschlossen ist. Zur druckdichten Abdichtung von Versorgungsleitung 5 und Förderrohr 2 dient eine Stopfbuchse 29. Das Versorgungsrohr 5 ist in dem Förderrohr 2 verschiebbar angeordnet. Das Versorgungsrohr 5 erstreckt sich durch das gesamte Förderrohr 2 bis in den Diffusionskonus 4, der in diesem Beispiel mit vier Austrittsöffnungen 30 versehen ist. Diese Austrittsöffnungen erweitern sich zur Aufgabeseites des Kohlenstaubes hin konisch, so daß sich der Querschnitt zu den Austrittsöffnungen 30 hin stetig verkleinert, bis der lichte Querschnitt der Förderleitungen 6 erreicht ist. An die Versorgungsleitung 5 ist im Bereich des Diffusionskonus ein Verteilerrohr 31 angeschlossen, das mit vier Injektorrohren 32 versehen ist, die den Austrittsöffnungen 30 gegenüberliegend münden. Durch Verschiebung des Versorgungsrohres 5 relativ zum Förderrohr 2 wird gleichfalls der Abstand der Injektorrohre 32 von den Eintrittsöffnungen 30 verändert, so daß hierdurch das Fördervolumen fein eingestellt werden kann. Zur Bestimmung des Abstandes der Injektorrohre 32 von den Austrittsöffnungen 30 ist am Förderrohr 5 eine Meßeinrichtung 33 angebracht, die in einer Buchse 34 geführt ist, die am Förderrohr 2 befestigt ist.

Die Einfüllöffnung 3 ist radial am Förderrohr 2 angeordnet und mit einem Ventil 8 verschlossen, das einen Flansch 35 für die Befestigung an dem Vorratsbehälter 9 aufweist. Dieses Ventil 8 dient zur Absperrung des Zustroms von Kohlenstaub. Dieses Ventil 8 wird immer dann geschlossen, wenn der Vorratsbehälter 9 neu beschickt wird. In der hierfür kurzen benötigten Zeitspanne wird die Versorgung dadurch aufrecht erhalten, daß der Kohlenstaub aus der Vorrichtung 1 entnommen wird.

Die Vorrichtung arbeitet wie folgt. Der Kohlenstaub wird aus einem Bunker in den Vorratsbehälter 9 eingeführt, wobei über das Entlüftungsventil 12 eine Entlüftung des Vorratsbehälters 9 eintritt. Nach dem Füllen des Vorratsbehälters 9 wird das Ventil 11 geschlossen und Druck in den Vorratsbehälter 9 über die Leitung 16 aufgebaut. Anschließend wird das Ventil 8 geöffnet, so daß der Kohlenstaub aus dem Vorratsbehälter 9 über die Einfüllöffnung 3 in das Förderrohr 2 der Vorrichtung 1 eintreten kann. Die geförderte Menge hängt zum einen vom Druck im Vorratsbehälter 9 ab und zum anderen vom Druck in der Versorgungsleitung bzw. in den Injektorrohren 32 ab und des weiteren vom Abstand der Injektorrohre von den Austrittsöffnungen 30. Je größer der Druck in den Injektorrohren gewählt wird, desto kleiner ist die geförderte Menge. Des weiteren wird die geförderte Menge an Kohlenstaub größer, je größer der Abstand der Injektorrohre 32 von den Austrittsöffnungen 30 ist. Der Injektordruck wird im übrigen so eingestellt, daß in den Förderleitungen 6 eine sogenannte Flugförderung eintritt, d. h. daß sich der geförderte Kohlenstaub nicht in diesen Leitungen ablagern kann. Aus den Leitungen 6 tritt der Kohlenstaub in Leitungsabschnitte 36 mit einem größeren Querschnitt ein, die als sogenannte Dekomprimierungseinheiten wirken, so daß die Geschwindigkeit des Kohlenstaubes hierdurch vermindert wird und dieser gleichmäßig in den Kupolofen 7 eingeblasen wird. Um eine gleichmäßige Einbringung des Kohlenstaubes in den Kupolofen 7 zu gewährleisten, ist es darüberhinaus erforderlich, daß die Förderleitungen 6 gleichlang ausgebildet sind.

Die maximale Durchsatzmenge einer Fördervorrichtung gemäß der Erfindung wird durch den Querschnitt der Förderleitungen, der Austrittsöffnungen sowie dem Druck und dem Durchmesser der Injektorrohre bestimmt. Die Dosierung, d. h. die minimalen Mengenänderungen, hängen zum einen von der Wahl der Querschnitte ab. In jedem Fall ist die Mengenänderung grammweise möglich. Die Versuche haben gezeigt, daß im Bereich von 0,1 kg/min bis 20 kg/min eine Mengenänderung im vorgenannten Rahmen zuverlässig gegeben ist. Dieses höchst genau dosierte Einblasen von Kohlenstaub in Öfen gewährleistet eine erhebliche Energieeinsparung, da hier die bisher üblichen Heizmittel wie Gas, Öl und Koks in erheblichem Umfange substituiert werden können.

**Patentansprüche**

1. Vorrichtung für eine dosierte Förderung von staubförmigen Gütern, insbesondere von Kohlenstaub, z. B. in Öfen, insbesondere für kleine und kleinste Mengen, mit einer Einfüllöffnung für das zu fördernde Gut, mit einem die Fördereinrichtung an der Ausgangsseite verschließenden Diffusionskonus (4), mit mindestens einer Austrittsöffnung (30) für das zu fördernde Gut, mit die Fördereinrichtung durchsetzenden Injektorrohren (32), die der Druckgaszufuhr dienen und den Austrittsöffnungen (30) gegenüberliegend angeordnet sind, gekennzeichnet durch eine Druckaufgabe des zu fördernden Gutes in die Fördereinrichtung (2), durch eine oder mehrere Austrittsöffnungen (30), die sich in Richtung auf die Aufgabe des Kohlenstaubes hin stetig vergrößern und durch der Anzahl der Austrittsöffnungen (30) entsprechende Injektorrohre (32), die relativ zu den jeweiligen Austrittsöffnungen (30) verstellbar sind.

2. Vorrichtung nach Anspruch 1, dadurch gekennzeichnet, daß die Injektorrohre (32) an einem gemeinsamen Verteilerrohr (31) angeschlossen sind, das von einem zentralen, die Fördereinrichtung der Länge nach durchsetzenden Versorgungsrohr (5) gespeist wird.

3. Vorrichtung nach Anspruch 1 oder 2, dadurch gekennzeichnet, daß die Einfüllöffnung (3) für die Kohlenstaubzufuhr radial zum Versorgungsrohr in der Fördereinrichtung (2) erfolgt.

4. Vorrichtung nach einem der Ansprüche 1 bis 3, dadurch gekennzeichnet, daß das Versorgungsrohr (5) in einer Führung (27) der Fördereinrichtung (2) verschiebbar gehaltert ist.

5. Vorrichtung nach einem der Ansprüche 1 bis 4, dadurch gekennzeichnet, daß an jeder Austrittsöffnung (30) eine Förderleitung (6) anschließbar ist, die mit steuerbaren Bypass-Leitungen (28) verbunden sind.

6. Vorrichtung nach einem der Ansprüche 1 bis 5, dadurch gekennzeichnet, daß die Förderleitungen (6) an Zufuhrleitungen (36) mit größerem Querschnitt als die Förderleitungen (6) angeschlossen sind.

7. Vorrichtung nach einem der Ansprüche 1 bis 6, dadurch gekennzeichnet, daß der Druck in der Versorgungsleitung (5) regelbar ist.

8. Vorrichtung nach einem der Ansprüche 1 bis 7, dadurch gekennzeichnet, daß die Einfüllöffnung (3) für den Kohlenstaub über ein Ventil (8) verschließbar ist.

9. Vorrichtung nach einem der Ansprüche 1 bis 8, dadurch gekennzeichnet, daß die Einfüllöffnung (3) mit einem Flansch (35) für den Anschluß eines Vorratsbehälters (9) für den Kohlenstaub versehen ist.

10. Vorrichtung nach Anspruch 9, dadurch gekennzeichnet, daß der Vorratsbehälter (9) ein Druckbehälter ist.

11. Vorrichtung nach einem der Ansprüche 9 oder 10, dadurch gekennzeichnet, daß der Vorratsbehälter mit einer steuerbaren Leitung (16) für die Druckgaszufuhr verbunden ist.

12. Vorrichtung nach einem der Ansprüche 9 bis 11, dadurch gekennzeichnet, daß in die Ausflußöffnung (19) des vorratsbehälters (9) eine zweite steuerbare Druckgaszuleitung (20) mündet.

13. Vorrichtung nach einem der Ansprüche 9 bis 12, dadurch gekennzeichnet, daß der Behälter mit einer verschließbaren Einfüllöffnung (10) versehen ist.

14. Vorrichtung nach einem der Ansprüche 1 bis 13, dadurch gekennzeichnet, daß in die Druckgas führenden Leitungen Rückschlagventile (18, 21, 25) eingebaut sind.

## Claims

1. A device for the metered transportation of powdered matter, more particularly coal dust, e. g. to furnaces, more particularly for small and minuscule quantities, having a feed opening for the matter to be transported, a diffusion cone (4) sealing the transport device on the outlet side, with at least one outlet opening (30) for the matter to be transported, having injector tubes (32) which penetrate the transport device, are used to supply pressure gas and are arranged so as to face the outlet openings (30), characterised by pressure delivery to the transport device (2) of the matter to be transported, via one or more outlet openings (30) which steadily increase in size in the opposite direction to the direction of travel of the coal dust, and via injector tubes (31) corresponding to the number of outlet openings (30) displaceable relative to the respective outlet openings (30).

2. A device according to claim 1, characterised in that the injector tubes (32) are connected to a common distributor tube (31) which is fed by a central supply tube (5) penetrating the transport device along its length.

3. A device according to claim 1 or 2, characterised in that the feed opening (3) for the coal dust supply is radial to the supply pipe in the transport device (2).

4. A device according to any one of claims 1 to 3, characterised in that the supply pipe (5) is displaceably mounted in a guide (27) of the transport device (2).

5. A device according to any one of claims 1 to 4, characterised in that to each outlet opening (30) a transport line (6) can be connected, which is connected to controllable by-pass lines (28).

6. A device according to any one of claims 1 to 5, characterised in that the transport lines (6) are connected to supply lines (36) having a larger section than the transport lines (6).

7. A device according to any one of claims 1 to 6, characterised in that the pressure in the supply line (5) is adjustable.

8. A device according to any one of claims 1 to 7, characterised in that the feed opening (3) for the coal dust can be sealed by a valve (8).

9. A device according to any one of claims 1 to 8, characterised in that the feed opening (3) is provided with a flange (35) for connecting a supply container (9) for the coal dust.

10. A device according to claim 9, characterised in that the supply container (9) is a pressure tank.

11. A device according to either of claims 9 or 10, characterised in that the supply container is connected to a controllable line (16) for the pressure gas supply.

12. A device according to any one of claims 9 to 11, characterised in that a second controllable pressure gas supply line (20) discharges into the outlet opening (19).

13. A device according to any one of claims 9 to 12, characterised in that the container is provided with a sealable feed opening (10).

14. A device according to any one of claims 1 to 13, characterised in that non-return valves (18, 21, 25) are built into the lines carrying the pressure gas.

## Revendications

1. Dispositif de transport dosé de matières pulvérulentes, en particulier de poussière de charbon, par exemple dans des fours, en particulier par petites et très petites quantités, comprenant une ouverture d'entrée pour la matière à transporter, un cône de diffusion (4) fermant l'installation de transport du côté sortie, au moins une ouverture de sortie (30) pour la matière à transporter, et des tubes injecteurs (32), traversant l'installation de transport, qui servent à l'arrivée de gaz comprimé et qui sont disposés en regard des ouvertures de sortie (30), caractérisé par une alimentation sous pression de la matière à transporter dans l'installation de transport (2), par une ou plusieurs ouvertures de sortie (30) qui s'élargissent de façon continue dans la direction de l'alimentation en poussière de charbon, et par des tubes injecteurs (32) en nombre correspondant à celui des ouvertures de sortie (30), ces tubes étant déplaçables par rapport aux ouvertures de sortie (30) correspondantes.

2. Dispositif selon la revendication 1, caractérisé en ce que les tubes injecteurs (32) sont raccordés à un tube répartiteur commun (31), lequel est alimenté par un tube d'alimentation central (5) traversant l'installation de transport dans le sens de la longueur.

3. Dispositif selon la revendication 1 ou 2, caractérisé en ce que l'ouverture d'entrée pour l'amenée de la poussière de charbon est établie, dans l'installation de transport (2), radialement par rapport au tube d'alimentation.

4. Dispositif selon l'une des revendications 1 à 3, caractérisé en ce que le tube d'alimentation (5) est maintenu avec possibilité de coulissement dans un guidage (27) du dispositif de transport (2).

5. Dispositif selon l'une des revendications 1 à 4, caractérisé en ce qu'une conduite de transport (6) peut être raccordée à chaque ouverture de sortie (30), ces conduites étant reliées à des dérivations (bypass) (28) réglables.

6. Dispositif selon l'une des revendications 1 à 5, caractérisé en ce que les conduites de transport (6) sont raccordées à des conduites d'amenée (36) ayant une plus grande section transversale que les premières (6).

7. Dispositif selon l'une des revendications 1 à 6, caractérisé en ce que la pression dans la conduite d'alimentation (5) est réglable.

8. Dispositif selon l'une des revendications 1 à 7, caractérisé en ce que l'ouverture de remplissage d'entrée pour la poussière de charbon peut être fermée par une vanne (8).

9. Dispositif selon l'une des revendications 1 à 8, caractérisé en ce que l'ouverture de remplissage d'entrée est pourvue d'une bride (35) servant au raccordement d'un réservoir (9) contenant la poussière de charbon.

10. Dispositif selon la revendication 9, caractérisé en ce que le réservoir (9) est un récipient sous pression.

11. Dispositif selon l'une des revendications 9 ou 10, caractérisé en ce que le réservoir est relié à une conduite (16) réglable permettant l'arrivée de gaz comprimé.

12. Dispositif selon l'une des revendications 9 à 11, caractérisé en ce qu'une deuxième conduite réglable (20) de gaz comprimé débouche dans l'ouverture d'échappement (19) du réservoir (9).

13. Dispositif selon l'une des revendications 9 à 12, caractérisé en ce que le réservoir est pourvu d'une ouverture (10) obturable de remplissage.

14. Dispositif selon l'une des revendications 1 à 13, caractérisé en ce que des clapets antiretour (18, 21, 25) sont prévus dans les conduites amenant le gaz sous pression.

0 164 436

Fig. 2

Fig.1

Fig. 3

Fig. 4